Europäisches Patentamt

European Patent Office

Office européen des brevets

(11) Publication number: **0 182 252**
A2

## (12) EUROPEAN PATENT APPLICATION

(21) Application number: **85114368.5**

(22) Date of filing: **12.11.85**

(51) Int. Cl.⁴: **C 03 B 37/018**

(30) Priority: **13.11.84 IT 6813584**

(43) Date of publication of application: **28.05.86**
**Bulletin 86/22**

(84) Designated Contracting States: **AT BE CH DE FR GB LI
NL SE**

(71) Applicant: **CSELT Centro Studi e Laboratori
Telecomunicazioni S.p.A., Via Guglielmo Reiss
Romoli, 274, I-10148 Turin (IT)**

(72) Inventor: **Roba, Giacomo, Via dei pini domestici, n. 5,
Cogoleto (Genova) (IT)**

(74) Representative: **Riederer Freiherr von Paar zu Schönau,
Anton et al, Freyung 615 Postfach 2664, D-8300 Landshut
(DE)**

(54) **Method of fabricating alumina-doped silica fibres.**

(57)     The method of fabricating alumina-doped silica fibres allows the production of silica and dopant with reactions between gaseous chemical compounds. Alumina is obtained from a reaction between oxygen and a low-temperature vaporable organometallic compound. The optical fibres produced do not present the refraction-index dip and exhibit low attenuation.

**0182252**

**PATENTANWÄLTE**

Dipl.-Ing. Anton Freiherr
**Riederer von Paar**

D-8300 Landshut
Postfach 2664, Freyung 615
☏ Landshut (0871) 22170
Fax (CCITT 2) manuell
Telex 58441 glala d

Frhr. Riederer v. Paar, Postfach 2664, D-8300 Landshut

CSELT Centro Studi e Laboratori

Telecomunicazioni S.p.A.

Turin, Italy

Partner in München:
**Dr. H. O. DIEHL**
☏ München (089) 177061
Fax (089) 177461 (autom.)
Telex 5215145 Zeus d

## Method of Fabricating Alumina-Doped Silica Fibres

**Description**

The present invention relates to industrial manufacture of physical carriers for optical telecommunications systems and more particularly it relates to a method of fabricating alumina-doped silica fibres.

As known, among dopants germanium oxide ($GeO_2$) is chiefly used for fabricating the optical-fibre core, both in case of inside processes (IVPO) and in case of outside processes (OVPO). In fact, $GeO_2$ gives with silica a binary compound having a stable vitreous network. Besides, haloid vehicle, wherefrom germanium tetrachloride ($GeCl_4$) is obtained by oxidation synthesis, is particularly suited for use in CVD techniques, since, at room temperature, it is an easily vaporable liquid (melting temperature $T_F = 49.5°C$; boiling temperature $T_E = 84°C$).

The optical properties of germanium oxide are particularly interesting: null material dispersion at wavelengths greater than 18 $\mu m$, infrared absorption peak due to molecular vibration of $G_e-O$ bond centered at a wavelength of about 12 $\mu m$.

The latter property prevents it from modifying the silica spectral-attenuation curve, which presents an infrared absorption peak for the molecular vibration of Si-0 bond centered at a slightly inferior wavelength (9.1 μm).

For these reasons germanium oxide is nowadays the most widely used compound in optical-fibre technology and the only one used for fabricating the core of silica-based optical fibres.

It presents, however, two disadvantages:

i) high cost of raw material;

ii) Rayleigh scattering coefficient higher than that of pure silica, whose value is about 0.6 dB/Km/μm$^4$.

Germanium effect in the network of binary compound $SiO_2$-$GeO_2$ is capable of increasing the scattering coefficient value proportionally to concentration of the dopant present in the network;

For example, in case of 3% molar germanium concentration (typical concentration for a monomode step-index fibre with Δn=3%, optimized for the second transmission window at 1.3 μm) Rayleigh scattering coefficient undergoes an increase of 0.2 dB/ Km/μm$^4$. If the molar concentration is increased up to beyond 20% to obtain the displacement of the zone of minimum chromatic dispersion, a value of Rayleigh scattering coefficient higher than 2 dB/Km/μm$^4$ would be reached. That is detrimental to material performances due to too high a rise of minimum attenuation values.

Alumina ($Al_2O_3$) is an alternative material to $GeO_2$, in fact, besides presenting all the advantages of germanium oxide, it presents the following characteristics:

a) Rayleigh scattering coefficient inferior to that of silica;

b) lower cost of raw materials;

c) high melting temperature.

It is of interest to underline the fact that a scattering coefficient lower than that of silica can allow the lowest attenuation levels to be reached for silica-based vitreous networks.

More particularly with vitreous networks $SiO_2$-$Al_2O_3$ a minimum attenuation value lower than that of silica can be obtained; for silica this value is equal to 0.12 dB/ Km in the wavelength range of 1.56 μm.

Point c), i.e. high melting temperature, allows a number of interesting remarks. The melting temperature of alumina (2045°C) is higher than those of silica (1703°C) and of germanium oxide (1086°C).

The physical properties of network $SiO_2-Al_2O_3$ are hence more similar to those of network $SiO_2$, than those of network $SiO_2-GeO_2$.

In addition, the presence of a compound with higher melting point prevents the dopant from diffusing towards the periphery during the preform collapsing step.

As a consequence, alumina-doped silica fibres fabricated according to MCVD technique do not present any dip (i.e. central refractive index decrease). This is a typical anomaly in the profile of germanium-oxide doped silica fibres, fabricated with the same method.

A confirmation of the latter property has been already reported in the paper entitled "Fabrication of Low-Loss $Al_2O_3$ doped silica fibres" by Y. Ohmori et alii, Electronics Letters, 2 September 1982, Vol. 18, No. 18.

The main disadvantage preventing the alumina from being industrially utilized resides in the fact that liquid or gaseous compounds at room temperature, to be used as aluminium vehicles and hence suited to CVD techniques, do not exist.

Aluminium halides are solid at room temperature and have rather high boiling temperatures. For example, $AlF_3$ sublimes at 1291°C, $AlCl_3$ sublimes at 178°C, $AlBr_3$ melts at 97°C and boils at 263°C, $AlI_3$ melts at 191°C and boils at 360°C. The use of CVD technique with such row materials requires reactant mixing and vaporization lines thermostated at high temperature. That entails implementing difficulties and does not assure pollution-free synthesis products.

Besides, solid compounds at room temperature are more difficult to purify with respect to liquid or gaseous ones, hence they can contain residual impurities detrimental to optical properties.

The use of AlCl₃ as a basic aluminium vehicle has been already suggested in the above cited paper, yet no valuable result has been obtained.

Said disadvantages are overcome and the above described technical problem is solved by the method of fabricating alumina-doped silica fibres provided by the present invention which allows silica to be doped with alumina by using a chemical-vapour-deposition technique (CVD) without requiring the use of vaporization and mixing lines thermostated at high temperature. The obtained optical fibres present low attenuation and are not affected with the dip.

The main object of the present invention is a method of fabricating alumina-doped silica fibres, wherein silica and dopant are obtained by the reaction between gaseous chemical compounds, characterized in that the dopant above is obtained by the reaction between oxygen and an organometallic compound of $Al(C_\alpha H_\beta)_\xi$ or of $AlCl(C_\alpha H_\beta)_\psi$ types, where $\alpha, \beta, \xi$ and $\psi$ are respectively the coefficients of presence in molecula of atoms C, H and of group CH, respectively.

Further preferred details of the invention will appear from the following description, by way of non limiting example, of an embodiment of the invention.

Alumina to be used as silica dopant in a CVD process is obtained from organometallic aluminium compounds, such as, e.g, Trimethylaluminum, Triethylaluminum, Dymethylaluminum chloride and Dyethilaluminum chloride. The chemical formulae, melting temperatures $T_F$ and boiling temperatures $T_E$ of said four compounds are reported as follows:

| Compound | Formula | $T_F$ | $T_E$ |
|---|---|---|---|
| Trymethylaluminum | $Al(CH_3)_3$ | 0 | 190 |
| Triethyalaluminum | $Al(C_2H_5)_3$ | −50.5 | 194 |
| Dimethylaluminum chloride | $AlCl(CH_3)_2$ | −50 | 84 under a 200 Torr pressure |
| Diethylaluminum chloride | $AlCl(C_2H_5)_2$ | −50 | 126 under a 60 Torr pressure |

They are compounds either of $Al(C_\alpha H_\beta)_\xi$ or of $AlCl(C_\alpha H_\beta)_\xi$ type, where $\alpha$, $\beta$ and $\xi$ are respectively the coefficients of presence in molecula of atoms C and H and CH group, which can vaporize at rather low temperature.

Such compounds in presence of oxygen give rise to the following reactions:

$$2Al(C_2H_5)_3 \quad + \quad 21O_2 \quad \rightarrow \quad Al_2O_3 \quad + \quad 12CO_2 \quad + \quad 15H_2O$$

$$2Al(CH_3)_3 \quad + \quad 12O_2 \quad \rightarrow \quad Al_2O_3 \quad + \quad 6CO_2 \quad + \quad 9H_2O$$

$$2AlCl(CH_3)_2 \quad + \quad 8O_2 \quad \rightarrow \quad Al_2O_3 \quad + \quad 4CO_2 \quad + \quad 5H_2O \quad + 2HCl$$

$$2AlCl(C_2H_5)_2 \quad + \quad 14O_2 \quad \rightarrow \quad Al_2O_3 \quad + \quad 8CO_2 \quad + \quad 9H_2O \quad + 2HCl$$

In addition to alumina ($Al_2O_3$), the reaction gives water, carbon dioxide, hydrocloric acid.

HCl and $CO_2$ are volatile and are expelled with the main flow of reaction products and reactants which have not participated in the reaction. The water could be incorporated with the network and cause optical absorption losses.

In case outside processes were used (OVPO = outside vapour phase oxidation), such as e.g. OVD (outside vapour deposition) and VAD (vapour axial deposition), the water incorporated during the synthesis is expelled during drying and consolidating phase, after the deposition. Reaction products $CO_2$, HCl, $H_2O$ are also typical products of basical reactions of these deposition techniques and hence they do not give rise to pollution problems.

Using inside deposition techniques (IVPO) such as, e.g. MCVD technique (Modified Chemical Vapour Deposition) the obstacle can be overcome by a "soft", i.e. non-consolidated, deposition, effecting then a layer by layer dehydration and consolidation of the deposit in presence of chlorine as dehydrating agent.

This operation does not reduce the process productivity in case of monomode-fibre manufacture, as the number of layers necessary to core fabrication is quite limited.

It is clear that what described has been given only by way of non limiting example. Variations and modifications are possible without going out of the scope of the present invention.

More particularly, other organometallic aluminum compounds can be used to produce alumina according to the present method of fabricating optical fibres.

**PATENTANWÄLTE**

0182252

Dipl.-Ing. Anton Freiherr
**Riederer von Paar**

D-8300 Landshut
Postfach 2664, Freyung 615
☏ Landshut (0871) 22170
Fax (CCITT 2) manuell
Telex 58441 glala d

Frhr. Riederer v. Paar, Postfach 2664, D-8300 Landshut

CSELT Centro Studi e Laboratori

Telecomunicazioni S.p.A.

Turin, Italy

Partner in München:
**Dr. H. O. DIEHL**
☏ München (089) 177061
Fax (089) 177461 (autom.)
Telex 5215145 Zeus d

## Method of Fabricating Alumina-Doped Silica Fibres

**Claims**

1. Method of fabricating alumina-doped silica fibres, wherein silica and dopant are obtained by the reaction between gaseous chemical compounds, characterized in that the dopant above is obtained by the reaction between oxygen and an organometallic compound of the $Al(C_\alpha H_\beta)_\xi$ or $AlCl(C_\alpha H_\beta)_\psi$ type, where $\alpha$, $\beta$ and $\xi$, $\psi$ are the coefficients of presence in molecula of atoms C, H and group CH respectively.

2. Method as in claim 1 characterized in that said organometallic compound is chosen out of Trimethylaluminum, Triethylaluminum, Dimethylaluminum chloride, Diethylaluminum chloride with chemical formulae equal to $Al(CH_3)_3$, $Al(C_2H_5)_3$, $AlCl(CH_3)_2$, $AlCl(C_2H_5)_2$.